(19) Europäisches Patentamt / European Patent Office / Office européen des brevets

(11) **EP 4 706 952 A1**

(12) **EUROPEAN PATENT APPLICATION**

(43) Date of publication:
11.03.2026 Bulletin 2026/11

(21) Application number: 24199516.6

(22) Date of filing: 10.09.2024

(51) International Patent Classification (IPC):
**B32B 5/00** (2006.01)    **B32B 5/08** (2006.01)
**B32B 5/18** (2006.01)    **B32B 19/02** (2006.01)
**B32B 27/40** (2006.01)    **B32B 27/42** (2006.01)

(52) Cooperative Patent Classification (CPC):
**B32B 5/00; B32B 5/08; B32B 5/18; B32B 15/046;
B32B 15/095; B32B 15/098; B32B 15/20;
B32B 19/02; B32B 27/08; B32B 27/40;
B32B 27/42; F16L 59/065;** B32B 2250/03;
B32B 2260/021; B32B 2260/04;    (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Afros S.p.A.
20121 Milano (IT)

(72) Inventors:
• Corti, Maurizio
22100 Como (CO) (IT)

• Volpato, Marco
21042 Caronno Pertusella (VA) (IT)
• Campi, Luca
21042 Caronno Pertusella (VA) (IT)
• Bechi, Simone
21042 Caronno Pertusella (VA) (IT)
• Generoso, Piero Aldo
21042 Caronno Pertusella (VA) (IT)

(74) Representative: Uexküll & Stolberg
Partnerschaft von
Patent- und Rechtsanwälten mbB
Beselerstraße 4
22607 Hamburg (DE)

(54) **VACUUM INSULATION PANELS AND METHOD FOR MAKING VACUUM INSULATION PANELS**

(57)    The present invention is directed to vacuum insulated panel comprising a thermally insulating core within an evacuated multilayer film encasement, characterized in that the core comprises at least 80 weight%, based on the total weight of the core, particulates of pulverized foam material of rigid or semirigid thermosetting and/or rigid or semi-rigid thermoplastic foam material having foam cells with an average cell size from 50 $\mu$m to 800 $\mu$m before pulverizing the foam material and being intermixed with binder material, wherein the pulverized foam particulates have a closed cell content of less than 2 volume%, wherein the particle size D95 of the pulverized particulates, for which 95% weight% of the pulverized particulates are smaller than D95, is less or equal to eight times the average cell size of the foam material before pulverizing. The invention is further directed to a method for making such vacuum insulated panels.

FIG. 3

**(Cont. next page)**

EP 4 706 952 A1

(52) Cooperative Patent Classification (CPC): (Cont.)
B32B 2260/046; B32B 2262/00; B32B 2262/062;
B32B 2262/101; B32B 2262/105; B32B 2262/108;
B32B 2262/14; B32B 2266/0214; B32B 2266/0278;
B32B 2266/0285; B32B 2272/00; B32B 2307/304;
B32B 2419/00; B32B 2607/00

**Description**

The present invention is directed to vacuum insulation panels and methods for making vacuum insulation panels, the vacuum insulated panel comprising a thermally insulating core within an evacuated multilayer film encasement.

For a long time, thermal insulation has been provided by layers of materials with a very low specific mass/volume ratio, with high porosity, and/or with a very fine network composed of solid and void structures, all characterised by a very high content of small spaces, containing air, contained in a matrix of solid constituents.

For thermal insulation components, the solid structure is preferably made up of compounds formed by organic molecules, for example fabrics of non-compacted fibres or in wads, foams formed by plastics with very fine cellularity, feathers, fur, cork, etc. Among the non-organic components, fibres made of glass or basaltic rocks, microspheres, silica, crystalline lattices (aerogel), etc. are widely used.

In this type of configuration with high, very fine and dense porosity, the transmission of heat by conduction or by contact between a solid constituent and the adjacent one, is greatly reduced due to the configuration of the contact zones which form very thin thermal bridges, with contact surfaces between a constituent and the adjacent one being extremely limited and fragmented.

Transmission by radiation is inhibited by the opacity of the constituents and by the fact that they are dense.

The main remaining mechanism of heat transmission, which can reach percentages from 65% to 85% of the total, is by convection and is due to the presence of air in the interstices of the porous materials within which heat is transmitted by the thermal agitation of the gas molecules therein, wherein the energy exchange is due to collisions of gas molecules with the solid surfaces that form the lattice constituting the insulation.

To drastically reduce the heat transmission in these porous and/or finely cross-linked materials, they can be configured in the form of evacuated boards, the so-called VIP panels (vacuum insulation panels) whose internal part, the "core" is made up of fine particles, aggregated or compacted as to resist atmospheric pressure. This core is confined within an airtight casing or envelope composed of a laminate film made up of alternating layers of plastic and metal (aluminium).

Before the encasement is sealed to completely close it, the core is placed in a vacuum chamber for removing gases, wherein the core is positioned in correspondence with a film arrangement that will, when closed by sealing, keep said core under vacuum in an airtight and vapour tight encasement. Usually, the cores are placed on a lower film portion, while upper film portions remain lifted by pinching clamps above the core. Alternatively, the film remains open, folded up on both sides around the core and it is closed over the central part of the core using an upsetting system. After the evacuation and extraction of the gases from the porous core material, the film is sealed by applying heated clamping surfaces that seal by welding it along overlapping edges at controlled temperature and pressure.

Before this sealing of the casings, the core of the VIP panels is kept under vacuum for a time period that is sufficiently long to extract gas residues from the porosities and therefore obtain a vacuum, inside the entire core, of less than 1 millibar in order to minimize any remaining gas residues and thereby also the contribution of convection to the heat transmission. VIPs and casings are kept in the vacuum chamber for the time necessary to evacuate almost all the gases from porosities of the core. By removing the main part of gases, the heat transmission due to the gas molecules agitation is thus reduced to a minimum, obtaining a casing with a much more thermally insulating core than the same core would have at atmospheric pressure.

VIP panels (Vacuum insulation panels) are widely used for thermal insulation where limited thickness of the insulation element on the one hand and high insulating performance on the other hand are required. Their core is normally formed by compacted very thin glass fibres (with a diameter of around 5-20 $\mu$m) or by fumed silica (very fine granules of porous silica) kept aggregated by a network of glass fibres with the granules interposed in the network.

Currently there are three main types of cores for vacuum insulation panels:

    1. Fumed silica, wherein typically a mixture of fumed silica with glass fibres or rockwool fibres is used. The mixture is compacted and the fibres act as an aggregation agent to hold the mixture in an aggregated state.

    2. Thin glass fibres or rockwool fibres which are brought by hot-pressing to an aggregated state of glass wool felt. In addition, mixtures of glass fibres and cotton fibres compacted to felt are described in CN 106145660 B.

    3. Core plates consisting of open cell polyurethane foam (shaped as homogeneous foam plates).

Except for the polyurethane foam plate cores, all other currently utilized core materials include thin glass fibres or rockwool fibres, in many cases as the main component, which have disadvantages in several respects.

These VIP panels, although already in widespread use, still present critical issues and problems in their use:

•   If the film of the encasement is perforated, during handling and use of the VIPs, they immediately lose a most of their insulating capacity.

- If the film is damaged to the point of allowing even a small part of its core contents to escape, it can widely pollute the environment with particles from the core, in particular, with sharp and very thin glass fibres, which can be deposited and stratified in the lungs of humans or in filters of machinery and air conditioners and therefore constitute a permanent pollutant causing health dangers for the respiratory system of humans as has been ascertained in medical surveys.
- The density of current cores is high (around 180 - 280 kg/m$^3$) so that panels formed with these cores are much heavier than the foam normally used for domestic and commercial refrigerators, refrigerated trucks, roofs and walls of thermally insulated buildings.
- The recycling and reuse of the above-mentioned panels and their cores is very difficult and complex because, usually, said VIP panels are glued to the respective walls made of metal or plastic. The use of glue is necessary because use of mechanical fixings involves a high risk of perforating the encasement and of the formation of very conductive thermal bridges. Consequently, for their removal at the end of life, they are torn or directly shredded together with the walls to which they are glued, breaking the encasements with an inevitable release of very fine fibres and dust into the environment which makes it very difficult to recapture them and render them harmless.
- The energy content, in terms of equivalent $CO_2$, of VIP panels with glass fibres or fumed silica cores is very high as both these materials are obtained from the transformation of silicon which are extracted in mines; therefore, a large amount of energy is required to produce the glass or fumed silica as starting material for forming the cores.
- In addition, if the encasement of current VIPs loses its airtightness, both the glass fibre and the fumed silica cores become inefficient in terms of the thermal insulation coefficient at atmospheric pressure.
- The VIP panels should include a core which provides high thermal insulation, and which can be handled without particular safety measures and does not pose substantial health or environmental risks even if core material should get into the environment.

The present invention proposes a VIP panel and a method for making VIP panels based on cores that can be made of recycled foam material which is pulverized into small particulates, wherein the foam material is a rigid or semirigid thermosetting and/or a rigid or semi-rigid thermoplastic foam materials, for example mainly obtained from low-density rigid polyurethane foams, but also from other types of foam, for example phenolic foams.

Said recycled material can for example come from both processing industrial waste and/or end-of-life waste foam parts which is reduced to powder to form the core of vacuum insulation panels.

Based on the characteristics of the original material, of the pulverized material and of the aggregation conditions, the present invention allows to provide cores to produce thermally insulating products in the form of VIP panels which have insulation properties that are at least twice as good as the original material, i.e. the starting cellular foam material, with closed cells or open cells, and that can reach values of Lambda up to 5 times better, both if starting foam materials come from industrial process waste or from the recovery of foam at the end of its life. It should be noted that it is economically advantageous to use waste or recycled insulation foam as the starting foam material, but in principle it is also possible to start with newly produced foam materials.

As already briefly explained in the introduction, the present invention is directed to thermal insulation panels, which are referred to as VIP (Vacuum insulation panels). These VIP are, like other commercial VIPs, made up of a core of particulate material kept under vacuum by a sealed casing made of a flexible multilayer film composed of alternating layers of plastic and metal, in particular aluminium, a film produced specifically for the incorporation of VIP panels and which has particular and specific characteristics of waterproofness and durability against penetration of gases and humidity.

In the technology proposed according to the present invention, said cores, i.e. the part kept under vacuum, comprise at least 80 weight%, based on the total weight of the core, of very fine particles obtained from pulverizing foam material selected from rigid or semi-rigid thermosetting and/or rigid or semi-rigid thermoplastic foam material, for example from polyurethane or phenolic foam pieces. In addition, the core contains a binder material intermixed with pulverized foam particulates. The foam material has an average cell size from 50 $\mu$m to 800 $\mu$m; the average cell size is determined according to ASTM D 3576:2020.

Depending on the size of the starting foam material pieces the pulverization can include steps of cutting, shredding, granulating, and grinding to obtain particulates of smaller and smaller size, wherein grinding is usually the last step of fragmentation. After pulverization most cells are broken and the closed cell content of the foam particulates is less than 2 volume%, wherein the closed cell content is determined according to DIN ISO 4590:2016 and using a gas pycnometer.

These particulates are further characterized by a maximum particle size specified as D95 particle size, for which D95 particle size 95 weight% of the pulverized foam particulates have a size smaller than D95, wherein according to the present invention the D95 size of the pulverized foam particulates is less than or equal to eight times the average cell size of the foam material before pulverization, preferably less than or equal to five times the average cell size. With a maximum average cell size of 800 $\mu$m the preferred D95 particulate size of less than five times of the average cell size corresponds to a D95 particle size of less than or equal to 4 mm.

The D95 size can be determined according to the standard ASTM 1921-12 by using test sieves. In principle the particle size distribution can be determined according to Method A of this standard using several sieves with different aperture sizes to derive the cumulative particle size distribution, and from the curve of the cumulative particle size distribution the D95 size value can determined where this curve intersects the horizontal 0.95 line. Alternatively, according to Method B of the standard a single test sieve with an aperture size of 4000 μm can be used to check whether at most 5 weight% of the particulates are retained by the sieve. Information regarding the determination of sieve aperture sizes can be found in the standards ISO 3310-1:2017 and 3310-2:2015.

Limiting the D95 size of the pulverized foam particulate with respect to the average cell size of the foam material has the consequence that the smaller the average cell size of the starting foam material is the lower can be the particle size of the pulverized particulates of the foam material which means that each particulate is a cluster of connected cells and cell constituent parts of broken cells of a rather moderate number of original foam cells.

For determining the D95 size of the pulverized foam particulates the ASTM 1921-12 test sieve method has to be performed before the steps of pulverizing the foam material. Alternatively, optical microscopes or scanning electron microscopes can be used together with image analysis software to determine the particle size distribution of the pulverized foam particulates in the core material including the binder.

It has been found that with the dimensions and characteristics of the pulverized foam material particulates as defined in claim 1 it is possible to obtain thermally insulating cores which have insulation properties that are at least twice as good as those of the original foam material from which the pulverized foam material particulates were made that make up the major portion of the core material. Due to the pulverization of the plastic foam material to very fine pulverized foam material particulates the thermal conductivity is substantially reduced. The low number of remaining closed cells and the high amount of broken cells in the pulverized foam material particulates of the core material ensures that after evacuation any remaining air is removed with only a very small amount of air remaining in closed cells. In other words, the low amount of closed cells in the foam particulates means that most of the space occupied by the pulverized foam particulate is occupied by skeleton remains of broken cells and all this space can be completely evacuated. Due to this improved capability to be evacuated and improved removal of remaining air residues from the pulverized foam material particulates the heat conductivity due to convection is substantially reduced in the evacuated core.

On the other hand, the core material is easy to handle and can also be processed without risks of contaminating the surrounding atmosphere with particles of hazardous dimension and sharp edges, and thus without creating health hazards as the typical prior art core materials comprising large amounts of glass fibres or rockwool fibres.

In a preferred embodiment the plastic foam material from which the pulverized particulates of foam material are made by one or more steps of successive disintegration are thermosetting foam materials in the form of polyurethane foams or phenolic foams comprising closed and/or open cells. Such foam materials are suitable for being processed to become the main constituent for the cores of the vacuum insulation panels according to the present invention. Furthermore, such foam materials are readily available at low costs from recycling of products including plastic foam insulations.

In a preferred embodiment the pulverized particulates of foam material consist of more than 94 weight%, based on the total weight of the pulverized particulates, of broken parts of cells. This large content of broken cell parts is in correspondence with the very low content of intact, closed cells.

In a preferred embodiment the density of the mixture of pulverized particulates of foam material and binder material is, by compression, increased to a compacted density that is larger than the bulk density of the mixture, wherein the ratio between the compacted density and the bulk density of the mixture is between 1.6 and 3.4. This increased density is preferred to obtain a higher compressive strength of the core to better resist the atmospheric pressure in the evacuated encasement. The compression of the mixture of pulverized particulates of foam material and binder material for a compacting it to the compacted density is performed when a predefined quantity of mixture for a core has been filled in a mould of a desired shape, wherein a counter-mould is compressing the surface of the mixture in the mould to reduce its volume to obtain the increased compacted density compared to the bulk density of the mixture, which corresponds to a volume reduction between 1.6 and 3.4. The determination of the bulk density is described in the standards ISO 697 and ISO 60.

In a preferred embodiment the particle size D95 of the pulverized particulates of the foam material is less than five times the average cell size of the foam material.

In a preferred alternative embodiment the core includes, in addition to binder material, intermixed fibres as a further aggregation agent which supports aggregation of the foam particulates. According to this embodiment fibres can even replace a large part of the binder material.

In a preferred embodiment the combined amount of binder material and fibres is within the range 5 to 20 weight% based on the total weight of the core. The relative contribution of binder material on the one hand and of fibres on the other hand can very in a wide range. In principle it is possible that the core contains binder material only for aggregating the foam material particulates in the core. If in addition fibres are used as an additional aggregating agent they can be combined in a balanced manner so that 9 weight% of binder material and 9 weight% of fibres based on the total weight of the core are present. Another example is an amount of 6 weight% of binder material and 12 weight% of fibres. Another example is a content of 5 weight% binder material and 4 weight% of fibres.

In a preferred embodiment the fibres comprise glass fibres, rockwool fibres, refractory ceramic fibres and/or organic fibres. Organic fibres can for example be cotton fibres.

In a preferred embodiment the fibres have a diameter within the range of 5 μm to 100 μm. Typically, very thin fibres have a diameter within the range of 5 μm to 20 μm. Glass fibres are commonly produced with a circular cross-section so that they have a well-defined diameter. Other fibres may have cross-sectional shapes that deviate from a circular cross-section, wherein the diameter in this case is considered as in effected diameter, wherein a circle with the effective diameter has the same cross-sectional area as the particular fibre considered which has a non-circular cross-section.

In a preferred embodiment the core is provided with at least one folding groove in one of its major surfaces, wherein the folding groove allows to fold the core so that the core can be adapted to a shape of inner walls of a housing which have to be heat insulated. In this case the core is shaped as a plate of uniform thickness S and comprises a folding groove allowing to fold the core such that the folded parts of the core define an angle $\beta$ between each other, wherein the folding groove has a trapezoidal cross-sectional shape flaring towards its opening and has the following geometrical parameters: a width 7 at its bottom; a depth such that the remaining thickness of the plate from the bottom of the groove is $h$; an angle $\alpha$ of the flaring sidewalls of the groove with respect to a normal of a plane defined by the plate shape of the core; wherein the plate and the folding groove are dimensioned such that the following relationships are fulfilled:

$$8 \text{ mm} \leq S \leq 80 \text{ mm}$$

$$S / 8 \leq h \leq S / 4$$

$$(1.3 \cdot h) \leq T \leq (1.6 \cdot h)$$

$$(\beta/2 - 5°) \leq \alpha \leq (\beta/2 + 5°).$$

In a preferred embodiment the core is provided with a bending zone, wherein the core is shaped as a plate of uniform thickness S and comprises the bending zone including a plurality of parallel folding grooves for allowing the bending zone to be bent to form a sector of a cylinder having a radius R, wherein each folding groove has a rectangular shape with a width t and a depth a, wherein each pair of two adjacent folding grooves are spaced apart by a distance d, wherein the plate and the plurality of the parallel folding grooves fulfill the following relationships:

$$R \geq 3 \cdot S$$

$$R / 8 \geq d \geq R / 12$$

$$d / 6 \geq t \geq d / 10$$

$$S / 2 \geq a \geq S / 4.$$

According to the present invention also a method for making a vacuum insulated panel is proposed, the method comprising:

- providing a thermally insulating core by performing the steps

    i) obtaining foam material selected from rigid or semirigid thermosetting and/or rigid or semirigid thermoplastic foam material having foam cells with an average cell size from 50 μm to 800 μm;
    ii) pulverizing the foam material including grinding to obtain foam particulates having a closed cell content of less than 2% after the grinding;
    iii) sieving the pulverized foam particulates to obtain a particle size D95 of the pulverized particulates of less or equal to eight times the average cell size of the foam material before pulverization, wherein for D95 95 weight% of the pulverized particulates are smaller than D95;
    iv) adding a binder material to the pulverized foam particulates and mixing the binder material and the pulverized foam particulates to obtain a mixture comprising at least 80 weight% of pulverized foam particulates based on the total weight of the mixture;
    v) filling an intended core material quantity of the mixture into a mould and compressing the mixture for compacting it to a compacted density in an interior space of the mould having an intended shape of the thermally insulating core, wherein the ratio between the compacted density and the bulk density of the mixture is between 1.6 and 3.4;
    vi) heating the mixture to remove any residual moisture therefrom and activating the binder material to solidify; and
    vii) removing the thermally insulating core from the mould after solidification of the binder;

- providing the core with a gas getter, placing it on an airtight multilayer film, and exposing it to an evacuated environment at a pressure below 0.5 millibar, and keeping it in the evacuated environment for a predetermined period of time to remove residual gas from the core;

- in the evacuated environment, enveloping the core with the airtight multilayer film and sealing overlapping edges of the airtight multilayer film to form an airtight encasement enclosing the core to obtain the vacuum insulated panel.

In a preferred embodiment of the method a step of pulverizing the foam material includes, depending on sizes of the foam pieces used as starting foam material, one or more steps of cutting, shredding, granulizing, grinding and sieving to obtain particulates of smaller size with each step.

In a preferred embodiment of the method a grinder setting of a grinding machine, as determined by the distance between grinding wheels of the grinding machine, is in a final grinding step set to 5 times the average cells size of the foam material.

According to a preferred embodiment of the method the input starting foam material that is to be pulverized is industrial parts or industrial scraps of foam material or end-of-life foam material. The utilization of industrial scraps or end-of-life foam material to be recycled is on the one economically preferred because such starting materials for the method of the invention are available at low costs, and on the other hand such scraps or waste foam materials can in this manner be recycled to produce a high performance thermal insulation material for cores of vacuum insulation panels.

In a preferred embodiment of the method, in addition to adding binder material to the pulverized foam particulates, synthetic or natural fibres are added as a further aggregating agent to the mixture to obtain a mixture comprising at least 80 weight% of pulverized foam particulates based on the total weight of the mixture. The fibres may comprise glass fibres, rockwool fibres, refractory ceramic fibres or cotton fibres.

In a preferred embodiment the step of heating the core material mixture to enhance and accelerate agitation and removal of gas and any residual moisture therefrom is performed in the evacuated environment at a pressure below 0.5 millibar.

The exposure of the core to an evacuated environment is typically performed in a vacuum chamber. This can for example be a large common vacuum chamber in which an automatic sequential operating and processing system is disposed which performs the steps requiring an evacuated environment in the method claim of the present invention. In addition, the automatic sequential operating and processing system can perform one or more other steps of the method of the present invention in the evacuated environment of the vacuum chamber, for example the heating step as mentioned in the previous paragraph and, for example, also the compression step before the heating step.

The evacuated state in the vacuum chamber is terminated by smoothly transitioning to atmospheric pressure, whereafter the vacuum insulate panels produced are removed from the vacuum chamber.

The present invention will now be described with reference to Figures in which:

Fig. 1 is a microscopic image of a rigid foam material with predominantly closed cells sealed by complete membranes formed between struts, wherein for two cells the cell sizes are indicated;

Fig. 2 is a microscopic image of a semi-rigid foam material with many open cells in which membranes between struts are broken or perforated;

Fig. 3 is a microscopic image of pulverized foam material particulates which were formed by pulverizing a very fine cellular thermal insulation foam (average cell size 120 $\mu$m) with struts of small width (12 $\mu$m);

Fig. 4 is a microscopic image of pulverized foam material particulates which were obtained by pulverizing a high-bearing thermal insulation foam material with coarse cellularity and strong struts (40 $\mu$m width), including size indications of the dimensions of two original (now broken) cells and the width of a strut;

Fig. 5 is a cross-sectional partial view of a plate-shaped core including a folding groove which extends from one surface of the core to a certain depth into the core, wherein the folding groove is configured to allow folding of the core along the folding groove to a rectangular configuration of the folded parts as shown in the middle of Fig. 5, or to an obtuse-angled configuration as shown on the right hand side in Fig. 5;

Fig. 6 shows a cross-sectional partial view of a plate-shaped core including a bending zone comprising a plurality of parallel folding grooves for allowing the bending zone to be bent to form a sector of a cylinder as shown on the right hand side in Fig. 6; and

Fig. 7 shows a graph of the compression strength of core with three degrees of compactification, namely the penetration force in dependence of the resulting indentation depth.

As already briefly explained in the introduction, the present invention is directed to a particular type of thermally insulating panels which are referred to as VIPs (Vacuum insulation panels) and to a method for making such VIPs. These VIPs are made up of a core of particles kept under vacuum within a sealed encasement formed by a flexible multilayer film composed of alternating layers of plastic and metal, in particular aluminium, a type of film which is produced specifically for the incorporation in VIP panels and which has particular and specific characteristics of minimal permeability for gases and humidity and of long-term durability of minimal permeability for air and humidity. The external layers of the envelope are suitable to be sealed by thermoplastic welding.

In the technology proposed herein, said cores, i.e. the part kept under vacuum in the encasement, have as principal constituents (at 80 weight% based on the total weight of the core) very fine particles of pulverized foam material of rigid or semi-rigid thermosetting and/or thermoplastic foam material, preferably of polyurethane or phenolic foam material. Pulverization of the starting foam material may include cutting, chipping, shredding, granulizing and grinding to obtain very fine foam particulates.

The maximum size of the particulates is limited by requiring a weight based D95 size to be smaller than eight times of the average cell size of the foam material. The pulverized fine particulates have a very low content of less than 2 volume% closed cells which ensures that the material can be almost completely evacuated, to guarantee optimal thermal insulation performance and long-term durabilty. The foam particulates are mixed with binder material added in percentage of their mass, and the mixture is subjected to pressing in moulds to increase the density of the mixture.

As well as for the usual VIPs with normal commercial cores, also for the present invention, once formed, the core and the component parts of the encasement not yet sealed, are suitably positioned with respect to each other on a masking equipment to guarantee the correct positioning of the core and of the films for forming the encasement, then they are introduced into a vacuum chamber which is closed and sealed to apply a deep vacuum and extract the air and gases from the cores. In the vacuum chamber, the vacuum is maintained at the necessary low value for the time required to evacuate the quantity of gas suitable to reduce their convection capacity and obtain a low Lambda value. Heating can be applied to enhance release of gases form pores of the core. After the predetermined evacuation time inside the vacuum chamber edges of the film encasement that are still open are welded by pinching and welding blades heated to a controlled temperature. After completely sealing the film encasement the evacuated state of the vacuum chamber is terminated, by gradually and slowly increasing the pressure to atmospheric pressure to prevent deformation and wrinkles, and the VIP is removed from the vacuum chamber.

The vacuum insulation panels and the method for making them according to the present invention will now be described with reference to characteristics of the materials that form the core of the VIP and with reference to the processing of the materials to obtain the improved thermal insulation. The following aspects will ne considered in the following description:

    1. The starting foam materials which are pulverized to form a powder of pulverized foam particulates and structure of the particulates

    2. Selection of particulates according to certain parameters to select the main constituents of the core material

    3. Addition of a binder material, and optionally of an additional aggregation agent

    4. Compaction of the pulverized foam particulates and binder mixture by pressing

    5. Forming of surface grooves on the core to allow adaption of the shape of the core to a particular installation situation

Type of starting foam materials to obtain pulverized foam particulates

The starting foam material from which foam particulates are to be formed by pulverizing the starting foam material are according to the present invention rigid or semi-rigid thermosetting foams and/or rigid semi-rigid thermoplastic foams, such as polystyrene and polyolefins. Preferred thermosetting foams are polyurethane and phenolic foams.

Rigid or semi-rigid foams are foams that resist pressure up to a certain pressure limit without deforming significantly and that do not recover their shape if deformed significantly by a pressure exceeding the pressure limit (note: a typical test for these foams is the so-called creep test in which a block of foam cut as a parallelepiped is placed inside a sealed container and subjected to a defined pressure (e.g. air pressure of one or two bars sometimes accompanied by temperature increase and moisture presence), and then the pressure is released and the residual deformation of the foam block is measured, wherein limits of 2% - 5% are accepted.)

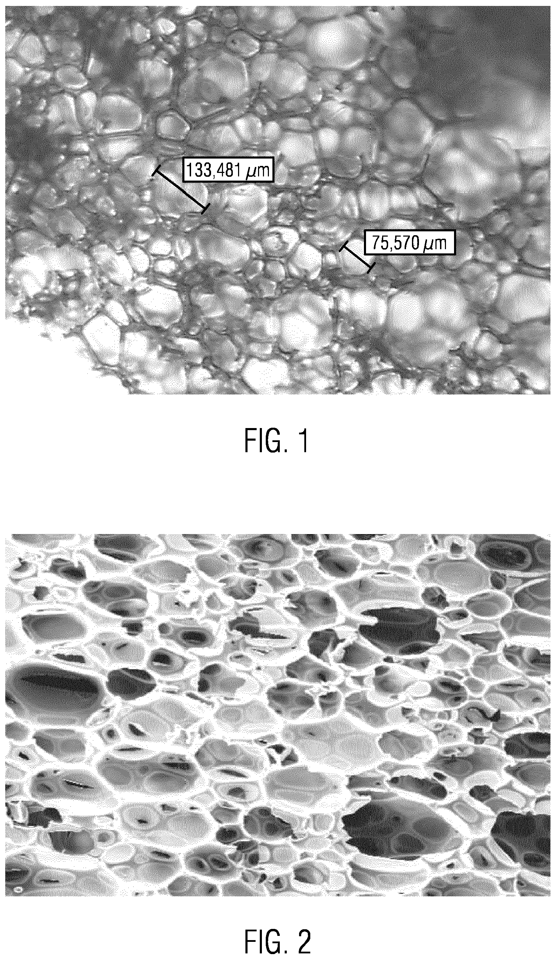

The rigid foams, for example polyurethane or phenolic based foams, can have a predominantly closed cell structure, meaning that a single cell is separated from adjacent ones by membranes which seal the interior space of the cell. In the case of rigid foams typically at least 90% of the cells are closed. An example of such rigid closed a cell foam is shown in Fig. 1 which is a microscopic image showing individual cells constituting the foam, wherein the individual cells are characterized by polyhedral shaped structures which are separated by planar or almost planar membranes delimited by polygonal edges (called struts) which are significantly thicker than the membranes. These struts have an approximately circular cross-section and terminate in nodes where they join with other struts forming the supporting structure of the membranes which extend between struts of the structure and isolate one cell from the adjacent once. Also indicated in Fig. 1 are the cell sizes for two exemplary cells.

Semi-rigid foams on the other hand are characterized by a higher amount of open cells (over 50%), which means that the membranes are not closed but leave holes in the surface of the cells. Such semi-rigid foams are further characterized by thicker and more rigid polygonal edge structures (struts) and the struts of larger diameter are connected to the nodes. The membranes are still present between the struts but have an open or broken central part resulting from tearing said membranes during expansion of the foam. Such a semi-rigid foam is shown in Fig. 2.

For economic reasons it is preferred that the starting foam material, which is to be pulverized to obtain the fine particulates which are the main constituents of the cores, come from industrial processing waste or from recovery and recycling at the end of their life. On the other hand, in principle it is also possible use such rigid or semi-rigid foams that were specifically produced for the purpose of being used as a starting material for the main constituents of the core material of the VIPs.

In particular, polyurethane foam produced by chemical reaction of isocyanate with polyester polyol and/or polyether polyol, or a mixture of the two, is used as the starting foam material for obtaining the pulverized foam particulates. The reaction, aided by the presence of blowing agents or water, gives a rise to foams called, in current polyurethane technology, PIR foams or rigid or semi-rigid PUR foams. The powder of fine pulverized foam particulates can also come from phenolic foams or from mixed foam particulates based on polyurethane foam on the one hand and on phenolic foam on the other hand.

In more detail, specific additives are added to said reactive resins to appropriately obtain the cellulation and the characteristics of rigid or semi-rigid foams: blowing agents, liquid or powdered flame retardants, catalysts, water, silicones and other substances, for example organic acids, which control the reaction and stabilize the formation of foam.

Foams with an average cell size starting from 50 $\mu$m up to 800 $\mu$m can be used for the purposes of the present invention. The average cell size is determined according to ASTM 3576:2020. Preferably, the average cell size can be in the range 100 $\mu$m to 500 $\mu$m.

Characteristics of the pulverized foam particulates

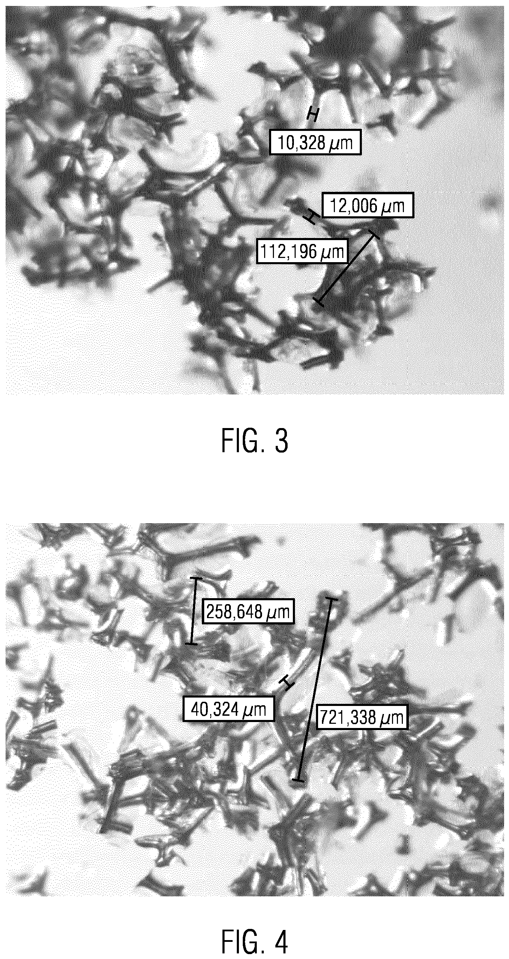

The pulverized foam particulates are the material basis that forms the main constituent of the VIP cores. The pulverized foam powder consists of foam particulates in which almost all cells are broken. Fig. 3 shows a microscopic image of pulverized foam particulates with broken cells which were formed by grinding a very fine cellular thermal insulation foam (average cell size 120 $\mu$m and with struts of small width (12 $\mu$m)). In Fig. 3 the size of one original cell is indicated, as well as the diameters of two struts.

Fig. 4 shows a microscopic image of foam powder particulates which were obtained by pulverizing a high-bearing thermal insulation foam with coarse cellularity and strong struts (40 $\mu$m diameter). In Fig. 4 the cell sizes of two original cells and the diameter of one strut are indicated.

The two images in Figs. 3 and 4 show powders of pulverized foam particulates with rather different particulate structures for example in terms of cell sizes and strut diameter.

Experiments with pulverized foam particulate powders and VIP cores mainly consisting of such pulverized foam particulates have evidenced that the finer the structure in sections of the struts of the powders is, the lower is the thermal transmission coefficient Lambda that is achieved when the cores are within an evacuated encasement. Nevertheless, the parameters described below by which the insulation performance of the cores are optimized in terms of powder selection, quantity of binder, and compacted density also contribute to an optimized performance of the VIPs according to the invention. This means that the Lambda values measured depend on the size and characteristic of the original foam cellulation, in particular on the size of the struts and on the content of broken, not closed cells with a minimum value of Lambda found to be in the range from $5 \cdot 10^{-3}$ W/mK to $7 \cdot 10^{-3}$ W/mK.

Experiments showed that optimal thermal insulation performance is achieved by grinding the foam according to its average cell size and select with differentiated separation methods only powder particulates having a size less than 8 times of the average size of the foam cells, and preferably less than 5 times of the average cell size.

To obtain an optimal condition of the particulates composing the foam powders, which form the cores of the present VIPs, the powders obtained from pulverizing insulation foam panels, including grinding the foam chips or flakes or granules, are conditioned by sieving to obtain specific granulometric characteristics including the particulate size distribution.

Sieving operations allow to select a maximum particle size of the foam powder and to separate any foreign particles coming from any covering layers of the insulation panels.

If the pulverized foam powder is obtained from a process of cutting the edges of insulation panels, the foam powder could also contain chips from covering layers. To discard such debris it is possible to select exclusively pieces coming from cutting the internal layer of polyurethane foam. Alternatively, chips coming from covering layers of the panels can be separated using magnetic or vibration separators when the covers are metallic; if the covering debris is composed of paper and fibres, the chips are separated by sieving and vibration. The maximum content of covering parts should be below 10% weight%, preferably below 4%.

Sieving operations separate the most part of fraction of overly large particles that may contain uncrushed cells i.e. cells that are still closed. In the present invention the D95 size of the pulverized foam particulates is limited to be less than or equal to 8 times the average cell size of the foam material, preferably be less than or equal to 5 times the average cell size. For a foam material at the upper limit of the average cells size of 800 $\mu$m this means that the D95 size preferably is less than or equal to 4 mm, whereas for a foam with an average cell size at the lower limit of 50 $\mu$m the D95 size is less than or equal to 0.4 mm, preferably less than or equal to 0.25 mm.

The D95 size can be determined according to the standard ASTM 1921-12 by using test sieves. In principle the particle size distribution can be determined according to Method A of this standard using several sieves with different aperture sizes to derive the cumulative particle size distribution, and from the curve of the cumulative particle size distribution the D95 size value can determined where this curve intersects the horizontal 0.95 line. Alternatively, according to Method B of the standard a single test sieve with an aperture size of 4 mm can be used to check whether at most 5 weight% of the particulates are retained by the sieve.

It turned out that that it is preferred during grinding operate a grinding machine with a grinding setting that is equal to or less than 5 times the average size of the foam cells, wherein the grinder setting is the distance or gap width between opposing grinding wheels which a rotated relative to each other. Furthermore. It was found to be preferred for the sieving network or mesh to have a sieve aperture size below 1.5 mm.

In fact, since the structure of the foams is based on the resistance of the struts while the membranes mainly serve to keep the cells sealed but contribute very little to the mechanical resistance, in the course of cutting and/or grinding operations most cell membranes are broken even if the particulates consist of several broken cells which are still aggregated by the respective support struts, and therefore even if the average size of the cells is significantly smaller than the sieve aperture sizes and/or the clearance of the grinding device the particulates composing the powder result to have predominantly cells with broken membranes; the pulverized foam particulate have a closed cell content of less than 2%. In other words, the by far major part of the space occupied by pulverized foam particulates is occupied by skeletons of struts of broken cells. This generally "open structure" ensures that all gas can be removed from spaces occupied by broken cell structures during the application of vacuum so that the core material after evacuation is essentially free of gas which brings the contribution of heat transfer by convection to a minimum.

Addition of a binder material, and optionally of an additional aggregation agent

A binder, in form or solid powder or liquid, is added and mixed with the pulverized and screened foam powder to bind the powder particulates and give the core structural integrity.

It is preferable to use solid binders in granules or powder with characteristics of being "dry" or without surface adhesion capacity to prevent, during its dispersion of the binder in the powder foam particulates, premature formation of solid pieces which would affect optimal dispersion of the binder material within the foam powder particulates.

These types of binders, which can for example be activated by heating, are easier to disperse in the powder matrix using a dedicated mixer, e.g. a rotating cylindrical container or a rotating mixer within a stationary container.

To disperse the solid binder, weighed doses of foam powder and binder are added into a powder mixer, for example of a rotary type, until a homogeneous dispersion within values of +/- 5 % is achieved.

Experimental measurements of the Lambda values. i.e. of the thermal transmission coefficient, on samples of VIPs with cores made with increasing quantities of binder, under otherwise the same construction conditions, and subjected to a vacuum lower than 0.1 millibar for the time necessary to remove gas from the porosity of the cores and then sealed under vacuum were performed, and said measurements showed that there is an optimized range of Lambda values, i.e. values that stay in a window around a minimum value of Lambda, and still result in cores with mechanical and structural characteristics sufficient to resist atmospheric pressure and indentation rigidity.

In fact, starting from very small quantities of binder and increasing the percentage, the Lambda values decrease until they reach a minimum value within a certain window or band of binder weight% added and then the values increase again, determining a range of binder weight% content based on the total weight of the core within which the weight% of binder added maintain proper values of Lambda as well as appropriate structural characteristics.

This remains correct when changing other core parameters, namely the type of foam powder and the compression of the foam powder and binder mixture to form the core.

Based on these experimental tests, it was found that, regardless of the Lambda value obtained which is a function of the other parameters that characterize the density and porosity of the characteristic core, there is an optimal range of binder weight% content based on the total weight of the core that must be used to obtain minimum thermal conductivity with all other conditions being equal or suitable.

This value is between 5 and 20 weight% of binder and is preferably between 8 and 15 weight%.

It has been found that a part of the binder material, even a large part thereof, can be replaced by fibres added together with the binder material, the fibres acting as a further aggregation agent which supports aggregation of the foam particulates. According to this embodiment fibres can even substitute a large part of the binder material.

The combined amount of binder material and fibres is within the range 5 to 20 weight% based on the total weight of the core. The relative contribution of binder material on the one hand and of fibres on the other hand can vary in a wide range. In principle it is possible that the core contains exclusively binder material for aggregating the foam material particulates in the core. If in addition fibres are used as an additional aggregating agent they can be combined in a balanced manner so that 9 weight% of binder material and 9 weight% of fibres based on the total weight of the core are present. Another example is an amount of 6 weight% of binder material and 12 weight% of fibres. Another example is a content of 5 weight% binder material and 4 weight% of fibres.

The fibres comprise glass fibres, rockwool fibres, refractory ceramic fibres and/or organic fibres. Organic fibres can for example be cotton fibres.

The fibres can have a diameter within the range of 5 $\mu$m to 100 $\mu$m. Typically, very thin fibres have a diameter within the range of 5 $\mu$m to 20 $\mu$m. Glass fibres are commonly produced with a circular cross-section so that they have a well-defined diameter. Other fibres may have cross-sectional shapes that deviate from a circular cross-section, wherein the diameter in this case is considered as in effected diameter, wherein a circle with the effective diameter has the same cross-sectional area as the specific fibre considered which has a non-circular cross-section.

Compaction of the pulverized foam particulates and binder mixture by pressing

Once the binder has been dispersed in the powder within a powder mixer (optionally with fibres added) the powder/binder/fibre mixture is filled into a mould. The shape of the mould corresponds to that of the core to be made or is larger both in plane dimensions and in height to allow the shape of the core to be cut out to be vacuum-packed.

The mould is set up with walls higher than the thickness of the core to be made and is equipped with a counter-mould which copies the upper surface of the core to be obtained. It can enter the cavity containing the mixture to compress the mixture of foam particulates and binder (and optionally fibres), reducing the volume containing the powder within said walls as it is needed to achieve the interval of optimization.

Before introducing the powder into the mould, the specific volume and density (bulk density) of the settled powder are measured.

The specific volume of the powder plus binder and therefore its settled (bulk) density are measured by placing a sample of the mixture in a cylindrical container which is shaken and/or vibrated until the level of said powder settles and then by measuring the volume and weight of the sample in these conditions.

To form the core, at the rated compression i.e. at the rated reduction of volume, the mixture is prepared and charged into the mould in the quantity by weight necessary to achieve the final requested shape (normally the final thickness of a flat panel) with a compacted density calculated in dependence of the volume reduction. By matter of fact introducing the powder into a mould and levelling it does not permit to achieve the conditions of specific volume and density of the settled powder as used as reference because the powder shall be settled by shaking or vibration, so that it is necessary to calculate the reduction of volume in terms of compressed density.

The powder is levelled and, using the counter-mould mounted on a pressing device, the introduced quantity of powder is compressed until it reaches the volume of the settled powder. Subsequently, the powder is further compressed until the required volume reduction is achieved which results in a correspondingly increased density which is referred to as compacted density in the following.

Once the pressing has been carried out to a reduced volume required to increase the density to the compacted density, the mould is heated. A first purpose of this heating is to cause evaporation of any evaporable residues (such as moisture) in the mixture. A second purpose of this heating is, in case of a solid binder, to heat the binder to its melting temperature and to maintain the temperature for the time necessary to melt all the binder that has been added as a solid powder. Then, by further increasing the temperature, the binder, a thermosetting binder is preferred, is brought beyond its polymerization temperature and maintained at this temperature so that it becomes as a stable agglomerant of the particulates of foam, aggregating the particulates in the contact areas between them. This gives a stable shape to the core so that it resists both the application of vacuum and the exposure to atmospheric pressure without being deformed excessively; moreover, it also permits to heat it during the exposure to vacuum to accelerate the removal of residual gas from the inner core structure.

A type of thermosetting binder is preferred in order to consolidate the porous material of the core and to eliminate, with melting and hardening, the thermal bridges that characterize the contact between the particles of binder not yet melted and foam particulates. However, other kinds of binders that are activated by other kinds of stimulation, for example by light (photocuring materials) or by chemical reaction of two mixed components etc., are likewise usable.

The compression index is defined as the ratio between the specific volume (settled volume) of the foam particulate powder mixed with the binder and the final compacted volume reached in the mould after compression to a controlled position. Consequently, the compression index can also be expressed as the ratio of the compacted density to the settled density (bulk density).

Experimental measurements of the lambda on VIP panels samples with cores made with the same quantity of binder by applying a vacuum lower than 0.1 millibar until it is stabilized, evidenced a range of lambda values within which an optimum of minimal values is achieved as a function of increasing compression volume of the powders independently from the other parameters.

Based on various experimental tests, it was found that, regardless of the value of Lambda obtained, which is a function of the other parameters that characterize the density and porosity that make up the core, there exists an optimal range of volume reduction of the mixture of foam particulate powder and binder that results in a range of minimum thermal conductivity when all other conditions are equal: This ratio between the initial settled volume and the compacted volume should be within the range 1.6 - 3.4 which is verified as a function of the density of the powder measured during the settlement test as the ratio between the compacted density to the settled bulk density. In other words, the initial settled volume must be reduced to a compacted volume by pressing it, thereby reducing (subtracting) 37% - 70% of the initial settled volume to obtain the compacted volume.

The compaction of the mixture has been described above in most places with reference to a mixture of a foam particulate powder and a binder material. However, it should be understood that the same applies to a mixture of foam particulate powder, binder, and fibres.

In the following the compressive strength of cores that have been compacted as described above will be described.

A core made of agglomerated foam particulate powder has described above shall have mechanical characteristics to

- allow it to be worked with toothed tools to produce shaped panels

- resist tendency to flake off when vacuum is applied and extracts air to flow out of its porosities

- resist atmospheric pressure which could compress it or reduce its dimensions when it is evacuated.

The mechanical strength is measured with a penetrometer which applies a local indentation on the core using a shaped tip made of plastic or metal. The penetrometer measures the depth of penetration in relation to the force applied.

When vacuum is applied the core of the VIPs must resist atmospheric pressure without collapsing and without undergoing significant reductions in thickness.

The tests verify characteristics of the pressure resistance of the cores which, subjected to pressure at least higher than atmospheric pressure, must not collapse or deform and must not undergo a reduction in thickness of more than 25% of the thickness of the sample core.

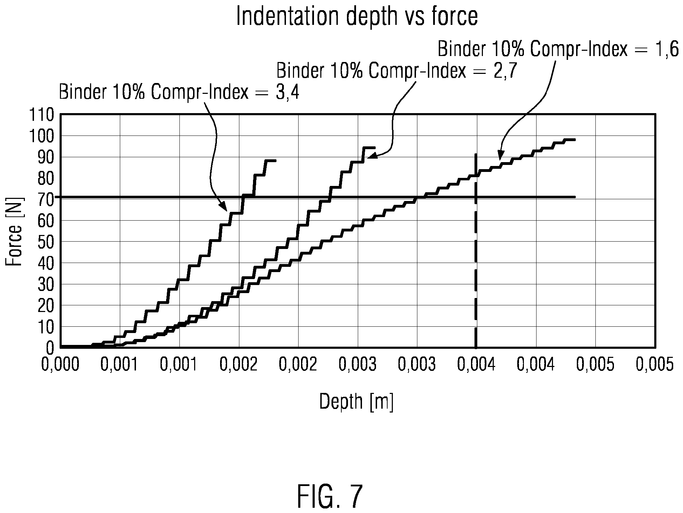

Fig. 7 shows a graph with three indentation curves showing the force exerted by the penetrometer as a function of indentation depth for cores with 10 weight% binder and compression indices of 1.6, 2.7, and 3.4 as indicated in Fig. 7. The horizontal line indicates a local pressure applied by the penetrometer corresponding to 125% of the atmospheric standard pressure, while the vertical dashed line corresponds to a penetration depth of 4 mm which in this example corresponds to 25% of the thickness of the panel core.

Forming of surface grooves on the core to allow adaption of the shape of the core

A problem for the application of VIP panels as insulation in box structures is, when a number of plate-shaped panels is used for cladding the inner walls of the box, that the joints of adjacent panels include thermal bridges resulting from the edges of these panels which are covered with the appropriate sealing film. These edges conduct heat throughout the extension of the sealing film along the edges much more than perpendicularly through the core of the panels and therefore constitute detrimental thermal bridges with substantial heat conduction.

To overcome this problem, it is possible to prepare suitable folding grooves into the core surface so as to be able to fold the core to an angle β from 175° up to 45° degrees avoiding these thermal bridges.

By applying vacuum and sealing the film said shaped cores within the sealing film, straight folds a with bending angle β (in degrees) are obtained in the proper positions and are adapted to the geometry of the walls of the cavity in which said VIP panels are inserted.

In particular to obtain angular folds, straight grooves with a trapezoid cross-sectional shape are formed on the core.

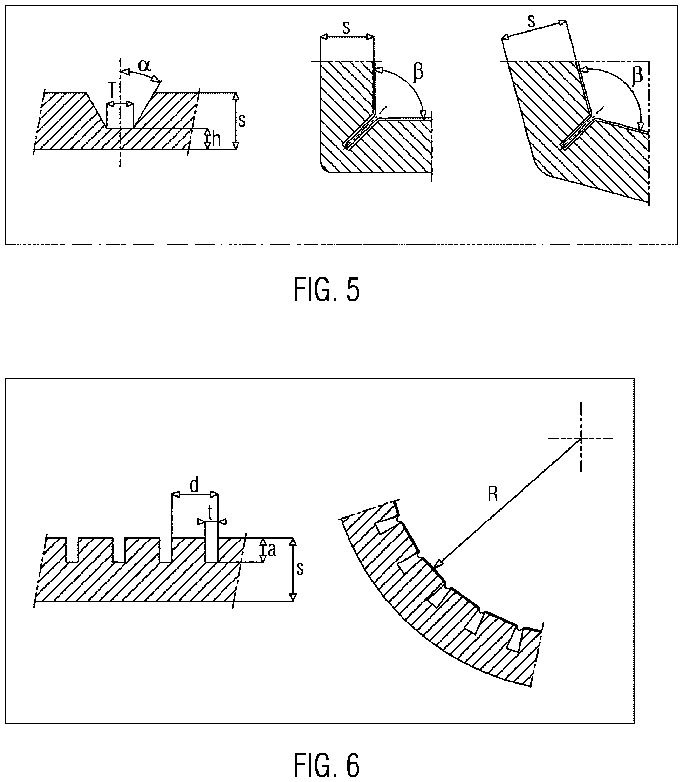

FIG. 5 shows the geometric parameters defining a groove on the core. The core is shaped as a plate of uniform thickness S and comprises a folding groove allowing to fold the core such that the folded parts of the core define an angle $\beta$ between each other. The folding groove has a trapezoidal cross-sectional shape flaring towards its opening and has the following geometrical parameters: a width T at its bottom; a depth such that the remaining thickness of the plate from the bottom of the groove is *h;* an angle a of the flaring sidewalls of the groove with respect to a normal of a plane defined by the plate shape of the core. These parameters should fulfil the following relationships for allowing the core to be appropriately folded to an angle $\beta$ (or to an angle close to $\beta$ within a range of +/-10°):

$$8 \text{ mm} \leq S \leq 80 \text{ mm}$$

$$S / 8 \leq h \leq S / 4$$

$$(1.3 \cdot h) \leq T \leq (1.6 \cdot h)$$

$$(\beta/2 - 5°) \leq \alpha \leq (\beta/2 + 5°).$$

These geometrical relationships are also valid for panel cores made of semirigid foam with a percentage of open cells above 97%.

Fig. 6 shows a core that is shaped as a plate of uniform thickness S and comprises a bending zone including a plurality of parallel folding grooves for allowing the bending zone to be bent to form a sector of a cylinder having a radius R, wherein each folding groove has a rectangular shape with a width t and a depth a, wherein each pair of two adjacent folding grooves are spaced apart by a distance d. The bending zone is configured to allow bending to a sector of a cylinder by folding each folding groove in the series of parallel folding grooves in the bending zone which allows to obtain shapes with as a sector of a cylinder or a complete cylinder if the bending zone extends completely across the core.

To obtain a proper bending capability of the panel the following relationships between the geometrical parameters of the bending zone should be fulfilled:

$$R \geq 3 \cdot S$$

$$R / 8 \geq d \geq R / 12$$

$$d / 6 \geq t \geq d / 10$$

$$S / 2 \geq a \geq S / 4.$$

These geometrical relationships are also valid for panel cores made of semirigid foam with a percentage of open cells above 97%.

## Claims

1. Vacuum insulated panel comprising a thermally insulating core within an evacuated multilayer film encasement, **characterized in that** the core comprises at least 80 weight%, based on the total weight of the core, particulates of pulverized foam material of rigid or semirigid thermosetting and/or rigid or semi-rigid thermoplastic foam material having foam cells with an average cell size from 50 $\mu$m to 800 $\mu$m before pulverizing the foam material and being intermixed with binder material, wherein the pulverized foam particulates have a closed cell content of less than 2 volume%, wherein the particle size D95 of the pulverized particulates, for which 95% weight% of the pulverized particulates are smaller than D95, is less or equal to eight times the average cell size of the foam material before pulverizing.

2. Vacuum insulated panel according to claim 1, **characterized in that** the foam material is a thermosetting foam material in the form of polyurethane foam or phenolic foam.

3. Vacuum insulated panel according to claim 1 or 2, **characterized in that** the pulverized particulates of foam material consist of more than 94 weight%, based on the total weight of the pulverized particulates, of broken parts of cells.

4. Vacuum insulated panel according to claim any of the preceding claim, **characterized in that** the density of the mixture of pulverized particulates of foam material and binder material is increased to a compacted density compared to the bulk density of the mixture, wherein the ratio between the compacted density and the bulk density of the mixture is between 1.6 and 3.4.

5. Vacuum insulated panel according to claim any of the preceding claim, **characterized in that** the particle size D95 of the pulverized particulates is less or equal to five times the average cell size of the foam material before pulverizing.

6. Vacuum insulated panel according to any of the preceding claims, **characterized in that** the core includes in addition to the binder material intermixed fibres as a further aggregation agent supporting aggregation of the foam particulates.

7. Vacuum insulated panel according to claim 6, **characterized in that** the amount of binder material and fibres is within the range 5 to 20 weight% based on the total weight of the core.

8. Vacuum insulated panel according to any of the claims 6-7, **characterized in that** fibres comprise glass fibres, rockwool fibres, refractory ceramic fibres and/or organic fibres.

9. Vacuum insulated panel according to any of the claims 6-8, **characterized in that** the fibres have a diameter within the range of 5 $\mu$m to 100 $\mu$m.

10. Vacuum insulated panel according to any of the claims 6-9, **characterized in that** the fibres have a length within the range of 1.0 mm to 10 mm.

11. Vacuum insulated panel according to any of the preceding claims, **characterized in that** the core is shaped as a plate of uniform thickness S and comprises a folding groove allowing to fold the core such that the folded parts of the core define an angle $\beta$ between each other, wherein the folding groove has a trapezoidal cross-sectional shape flaring towards its opening and has the following geometrical parameters: a width T at its bottom; a depth such that the remaining thickness of the plate from the bottom of the groove is $h$; an angle a of the flaring sidewalls of the groove with respect to a normal of a plane defined by the plate shape of the core; wherein the plate and the folding groove are dimensioned such that the following relationships are fulfilled:

$$8 \text{ mm} \leq S \leq 80 \text{ mm}$$

$$S / 8 \leq h \leq S / 4$$

$$(1.3 \cdot h) \leq T \leq (1.6 \cdot h)$$

$$(\beta/2 - 5°) \leq \alpha \leq (\beta/2 + 5°).$$

12. Vacuum insulated panel according to any of the preceding claims 1 to 9, **characterized in that** the core is shaped as a plate of uniform thickness S and comprises a bending zone including a plurality of parallel folding grooves for allowing the bending zone to be bent to form a sector of a cylinder having a radius R, wherein each folding groove has a rectangular shape with a width t and a depth a, wherein each pair of two adjacent folding grooves are spaced apart by a distance d, wherein the plate and the plurality of the parallel folding grooves fulfill the following relationships:

$$R \geq 3 \cdot S$$

$$R / 8 \geq d \geq R / 12$$

$$d / 6 \geq t \geq d / 10$$

$$S / 2 \geq a \geq S / 4.$$

13. Method for making a vacuum insulated panel comprising:

- providing a thermally insulating core by performing the steps

i) obtaining foam material of rigid or semi-rigid thermosetting and/or rigid or semi-rigid thermoplastic foam material having foam cells with an average cell size from 50 $\mu$m to 800 $\mu$m;
ii) pulverizing the foam material including grinding to obtain foam particulates having a closed cell content of less than 2 volume% after the pulverizing step;
iii) sieving the pulverized foam particulates to obtain a particle size D95 of the pulverized particulates of less or equal to eight times the average cell size of the foam material before the pulverizing step, wherein for D95 95 weight% of the pulverized particulates are smaller than D95;
iv) adding a binder material to the pulverized foam particulates and mixing the binder material and the pulverized foam particulates to obtain a core material mixture comprising at least 80 weight% of pulverized foam particulates based on the total weight of the mixture;
v) filling an intended quantity of core material mixture into a mould and compressing the mixture for compacting it to a compacted density in an interior space of the mould having an intended shape of the thermally insulating core, wherein the ratio between the compacted density and the bulk density of the mixture is between 1.6 and 3.4;
vi) heating the mixture to remove any residual moisture therefrom and activating the binder material to solidify; and
vii) removing the thermally insulating core from the mould after solidification of the binder;

- providing the core with a gas getter, placing it on an airtight multilayer film, and exposing it to an evacuated environment at a pressure below 0.5 millibar, and keeping it in the evacuated environment for a predetermined period of time to remove residual gas from the core;
- in the evacuated environment enveloping the core with the airtight multilayer film and sealing overlapping edges of the airtight multilayer film to form an airtight encasement enclosing the core, thereby obtaining the vacuum insulated panel.

14. Method according to claim 13, **characterized in that** pulverizing the foam material includes, depending on piece sizes of the starting foam material, one or more steps of cutting, shredding, granulizing, grinding and sieving to obtain particulates of smaller size with each step.

15. Method according to claim 13 or 14, **characterized in that** in a final grinding step performed by a grinding machine a grinder setting of the grinding machine, the grinder setting being determined by a distance between grinding wheels of the grinding machine is set to five times the average cell size of the foam material.

16. Method according to any of the claims 13-15, **characterized in that** the starting foam material that is to be pulverized is industrial parts or scraps of foam material or end-of-life foam material.

17. Method according to any of the claims 13-16, **characterized in that**, in addition to adding binder material to the pulverized foam particulates, synthetic or natural fibres are added as a further aggregating agent to the mixture to obtain a mixture comprising at least 80 weight% of pulverized foam particulates based on the total weight of the mixture, wherein optionally the fibres comprise glass fibres, rockwool fibres, refractory ceramic fibres or cotton fibres.

18. Method according to any of the claims 13-17, **characterized in that** the step of heating the mixture to enhance agitation and accelerate the removal of gas and any residual moisture therefrom is conducted in the evacuated environment at a pressure below 0.5 millibar.

19. Method according to any of the claims 13-17, **characterized in that**, after filling an intended quantity of core material mixture into a mould, the following steps of compressing the mixture for compacting it; heating the mixture to remove any residual moisture therefrom and activating the binder material to solidify; providing the core with a gas getter; exposing the core to an evacuated environment at a pressure below 0.5 millibar in a vacuum chamber, keeping it in the evacuated environment for a predetermined period of time to remove residual gas from the core, enveloping the core with the airtight multilayer film and sealing of overlapping edges of the airtight multilayer film to form an airtight encasement enclosing the core; are conducted an automatic sequential operating system disposed inside the vacuum chamber which operates to sequentially perform the afore-mentioned steps.

FIG. 1

FIG. 2

FIG. 3

FIG. 4

FIG. 5

FIG. 6

FIG. 7

Europäisches
Patentamt

European
Patent Office

Office européen
des brevets

# EUROPEAN SEARCH REPORT

**Application Number**

EP 24 19 9516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H10 300331 A (MITSUBISHI ELECTRIC CORP) 13 November 1998 (1998-11-13) | 1-3,5-7, 13-19 | INV. B32B5/00 |
| Y | * abstract; claims 1-41 * | 1-19 | B32B5/08 |
| | * paragraphs [0013], [0022] * | | B32B5/18 |
| | * paragraphs [0027], [0033] * | | B32B19/02 |
| | * paragraphs [0047], [0048] * | | B32B27/40 |
| | * figure 2 * | | B32B27/42 |
| | * paragraphs [0077], [0081] * | | |
| | * paragraphs [0037], [0040] * | | |
| | * paragraph [0064] * | | |
| | ----- | | |
| X | JP 2001 349664 A (SANYO ELECTRIC CO) 21 December 2001 (2001-12-21) | 1-3,5,7 | |
| Y | * abstract; claims 1-5 * | 1-19 | |
| | * paragraphs [0006], [0007], [0008] * | | |
| | * paragraphs [0018], [0019] * | | |
| | * paragraphs [0031], [0032] * | | |
| | ----- | | |

**TECHNICAL FIELDS SEARCHED (IPC)**

B32B

The present search report has been drawn up for all claims

| Place of search | Date of completion of the search | Examiner |
|---|---|---|
| The Hague | 20 January 2025 | Bergmans, Koen |

EPO FORM 1503 03.82 (P04C01)

**EP 4 706 952 A1**

## ANNEX TO THE EUROPEAN SEARCH REPORT
## ON EUROPEAN PATENT APPLICATION NO.

EP 24 19 9516

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | | Publication date | Patent family member(s) | | Publication date |
|---|---|---|---|---|---|
| JP H10300331 | A | 13-11-1998 | CN | 1191959 A | 02-09-1998 |
| | | | DE | 69827537 T2 | 10-11-2005 |
| | | | EP | 0862032 A2 | 02-09-1998 |
| | | | JP | 3876491 B2 | 31-01-2007 |
| | | | JP | H10300331 A | 13-11-1998 |
| | | | KR | 19980070216 A | 26-10-1998 |
| | | | TW | 343268 B | 21-10-1998 |
| | | | US | 5989371 A | 23-11-1999 |
| | | | US | 6266941 B1 | 31-07-2001 |
| JP 2001349664 | A | 21-12-2001 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106145660 B